# EUROPÄISCHE PATENTSCHRIFT

(11) **EP 1 421 661 B1**
(45) Veröffentlichungstag und Bekanntmachung des Hinweises auf die Patenterteilung: **03.01.2007**
(21) Anmeldenummer: 02758159.4
(22) Anmeldetag: 22.08.2002
(51) Int. Cl.: H02G 5/06

(54) **SCHEIBENFÖRMIGER STÜTZISOLATOR FÜR EINE DREIPHASIG GEKAPSELTE HOCHSPANNUNGSANLAGE**
DISCOID SUPPORT INSULATOR FOR A THREE-PHASE ENCAPSULATED HIGH-VOLTAGE INSTALLATION
SUPPORT ISOLANT EN FORME DE DISQUE POUR INSTALLATION HAUTE-TENSION A BOITIER PREVU POUR DU TRIPHASE

(30) Priorität: 28.08.2001 DE 10142856
(43) Veröffentlichungstag der Anmeldung: 26.05.2004
(73) Patentinhaber: SIEMENS AKTIENGESELLSCHAFT, 80333 München (DE)
(72) Erfinder: GÖSCHEL, Sebastian, 14621 Schönwalde (DE); TAUTZ, Andre, 16565 Lehnitz (DE)
(86) Internationale Anmeldenummer: PCT/DE2002/003111
(87) Internationale Veröffentlichungsnummer: WO 2003/026090

(56) Entgegenhaltungen:
- DE-A- 19 654 743
- DE-U- 7 232 168

## Beschreibung

Die Erfindung liegt auf dem Gebiet der grundlegenden elektrischen Bauteile und ist bei der konstruktiven Ausgestaltung eines Stütz- oder Durchführungs-Isolators anzuwenden, der bei dreiphasig gekapselten, gasisolierten Hochspannungsanlagen zur Halterung der Phasenleiter dient.

Ein bekannter Stützisolator dieser Art besteht aus einem scheibenförmigen Isolierteil, einer das Isolierteil in dessen Randbereich erfassenden Ringarmatur und drei auf einem Teilkreis angeordneten, in das Isolierteil eingebetteten Durchführungsarmaturen. An diesen Durchführungsarmaturen werden Phasenleiterabschnitte befestigt (DE 26 24 908 A1). - Stützisolatoren dieser Art werden üblicherweise für Hochspannungs-Schaltanlagen und -Rohrleiteranlagen im Spannungsbereich bis 170 kV verwendet. Hochspannungsanlagen höherer Spannungsebenen sind in aller Regel einphasig gekapselt ausgebildet.

Für einphasig gekapselte Hochspannungsanlagen ist ein Stützisolator bekannt, bei dem das scheibenartige Isolierteil einen W-förmigen Querschnitt aufweist, wobei der abzustützende Leiter das "W" in der Mitte axial durchdringt. Durch diese Ausgestaltung des Isolierteiles lassen sich die Vorzüge eines Scheibenstützers und eines trichterförmigen Stützers miteinander verbinden (DE 72 32 168 U). - Bei einem anderen, ähnlich aufgebauten Stützisolator ist der "W-förmige" Querschnitt als "aus zwei Hohlkegelstümpfen bestehend" bezeichnet. Diese Hohlkegelstümpfe befinden sich auf derselben Seite einer Ebene, die senkrecht zur Mittelachse einer zentral angeordneten Eingussarmatur durch die Mitte der Eingussarmatur und die Mitte des Außenrandes des Isolierkörpers verläuft. Die beiden Hohlkegelstümpfe bilden dabei einen Übergangsbereich in Gestalt einer ringförmigen Erhöhung. - Zur Anpassung an höhere Betriebsspannungen kann der Isolatorkörper auch aus mehreren Hohlkegelstümpfen aufgebaut sein, die die Eingussarmatur konzentrisch umgeben (DE 196 54 743 A1).

Ausgehend von einem scheibenförmigen Stützisolator mit den Merkmalen des Oberbegriffes des Patentanspruches 1 liegt der Erfindung die Aufgabe zugrunde, den Stützisolator so auszubilden, dass er auch für Betriebsspannungen von mehr als 170 kV verwendet werden kann.

Zur Lösung dieser Aufgabe ist gemäß der Erfindung vorgesehen, dass der Stützisolator eine Struktur aufweist, die aus wenigstens zwei konzentrisch und gegenläufig zueinander angeordneten Hohlkegelstümpfen zusammengesetzt ist, wobei die Hohlkegelstümpfe in einem ringartigen Bereich ineinander übergehen, und dass die Durchführungsarmaturen in den ringartigen Übergangsbereich des Isolierteiles eingebettet sind und dieser Übergangsbereich hierzu jeweils domartig aufgeweitet ist.

Bei einer derartigen Ausgestaltung des Stützisolators ist bei kleiner Bauweise zwischen den Durchführungsarmaturen ein relativ langer Kriechweg gewährleistet, wodurch Überschläge längs der Oberfläche des Isolierteiles verhindert sind. Zugleich wird zwischen den Durchführungsarmaturen eine möglichst geringe dielektrische Beanspruchung im Material des Isolators (Gießharz, insbesondere Epoxidharz) erreicht.

Um bei der Montage des neuen Stützisolators keine Rücksicht auf die Einbaulage nehmen zu müssen, kann in Weiterbildung der Erfindung die axiale Höhe der Ringarmatur zweckmäßig so gewählt werden, dass sie der axialen Länge der Durchführungsarmaturen entspricht; dabei sind die Durchführungsarmaturen und die Ringarmatur parallel zueinander ohne axialen Versatz anzuordnen. Diese Anordnung wird zweckmäßig mit der Maßnahme kombiniert, dass der Rand des Isolierteiles außermittig in die Ringarmatur eingreift und dass die axiale Höhe des Isolierteiles kleiner als die axiale Höhe der Ringarmatur ist.

Zur Anpassung des neuen Stützisolators an sehr hohe Betriebsspannungen kann das Isolierteil auch eine aus drei oder vier ineinander übergehenden Hohlkegelstümpfen zusammengesetzte Struktur aufweisen, wobei je nach Ausgestaltung der verschiedenen Kegelstümpfe die Durchführungsarmaturen in einem mittleren oder einem äußeren ringartigen Übergangsbereich anzuordnen sind. Gegebenenfalls kann der innere Hohlkegelstumpf als Kegelspitze ausgebildet sein und können die Hohlkegelstümpfe unterschiedliche Neigungen aufweisen.

Zwei Ausführungsbeispiele des neuen Stützisolators sind in den Figur 1 bis 3 dargestellt. Dabei zeigen
Die Figuren 1 und 2 eine erste Ausführungsform in Ansicht und im Querschnitt und
Figur 3 eine zweite Ausführungsform in schematischer Darstellung im Querschnitt.

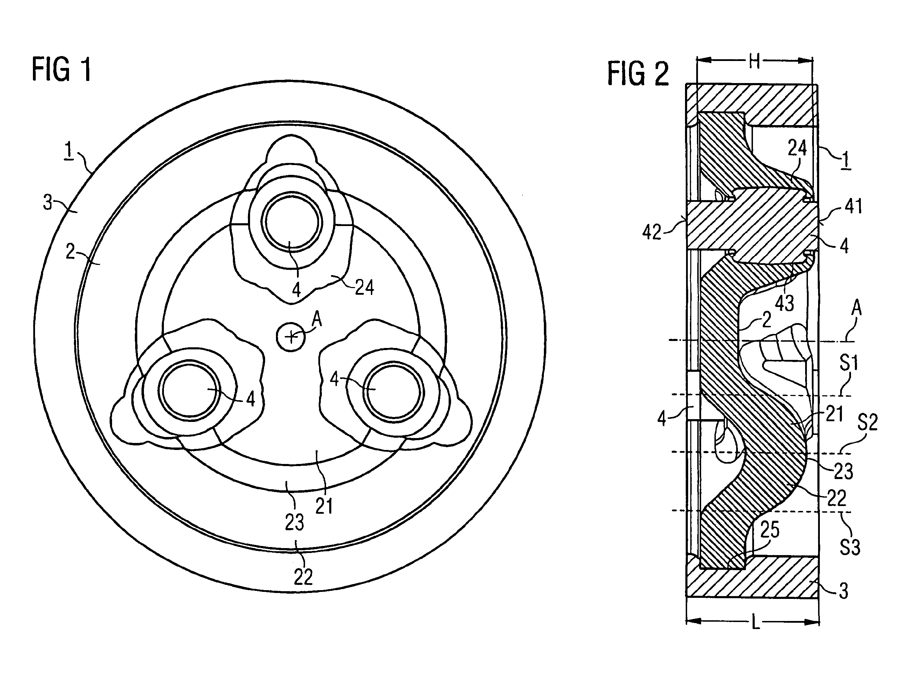

Der Stützisolator 1 gemäß Figur 1 ist symmetrisch zu einer Achse A aufgebaut und besteht im Wesentlichen aus einem scheibenförmigen Isolierteil 2, einem das Isolierteil in einem Randbereich 25 erfassenden Ringarmatur 3 und drei auf einem Teilkreis angeordneten Durchführungsarmaturen 4. Unter Berücksichtigung der in Figur 2 dargestellten Hilfslinien S1, S2 und S3 geht das Isolierteil 2 von dem äußeren Randbereich 25 gesehen zunächst in einen Hohlkegelstumpf 22 über, an den sich ein gegenläufiger Hohlkegelstumpf 21 anschließt. An den Hohlkegelstumpf 21 schließt sich ein nicht näher bezeichneter ebener Bereich an.

Die beiden Hohlkegelstümpfe 22 und 21 bilden einen ringartigen Übergangsbereich 23, in dem die Durchführungsarmaturen 4 angeordnet sind. Zur Aufnahme dieser Durchführungsarmaturen, die mit einer Steuerelektrode 43 versehen sind, ist der ringartige Übergangsbereich 23 domartig 24 aufgeweitet.

Die axiale Höhe der Ringarmatur 3 entspricht der axialen Länge L der Durchführungsarmaturen 4, so dass die Stirnflächen 41 und 42 der Durchführungsarmaturen die Stirnflächen der Ringarmatur 3 nicht überragen.

Für die Anordnung gemäß Figur 2 ist dabei charakteristisch, dass der Randbereich 25 des Isolierteiles 2 außermittig in die Ringarmatur 3 eingreift. Dies bedeutet, dass die Hohlkegelstümpfe 21 und 22 einseitig zum Randbereich 25 angeordnet sind, wodurch sich die axiale Höhe H des Stützisolators als Ganzes optimieren lässt. Diese ist kleiner als die axiale Länge L der Durchführungsarmaturen 4.

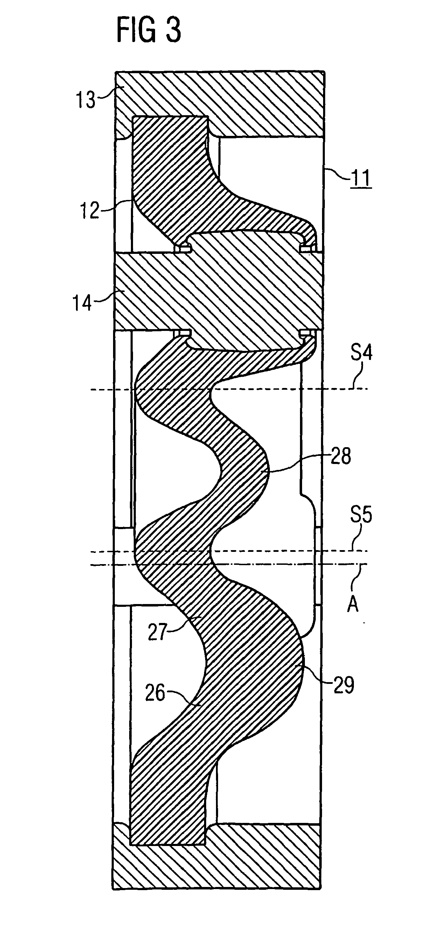

Figur 3 zeigt einen Stützisolator 11, bei dem die Struktur des Isolierteiles 12 ähnlich wie die Struktur des Isolierteiles 2 gemäß den Figuren 1 und 2 ausgebildet ist. Ein wesentlicher Unterschied besteht darin, dass der um die Achse A angeordnete Bereich des Isolierteiles nicht eben, sondern ebenfalls hohlkegelartig, in diesem Fall als Hohlkegelspitze, ausgebildet ist. Die zwischen den Hilfslinien S4 und S5 befindliche Hohlkegelspitze 28 geht demnach in einen Hohlkegelstumpf 27 und dieser in einen Hohlkegelstumpf 26 über, wobei die Durchführungsarmaturen 14 in den ringartigen Übergangsbereich 29 zwischen den beiden Hohlkegelstümpfen 26 und 27 eingebettet sind. Der Randbereich 30 des Isolierteiles 12 greift hier ebenfalls außermittig in die Ringarmatur 13 ein.

Der neue Stützisolator ist in der beschriebenen Ausgestaltung als Schottisolator verwendbar. Um ihn im Bedarfsfall gasdurchlässig auszugestalten, können im Bereich zwischen den Durchführungsarmaturen ein oder mehrere Durchbrüche vorgesehen werden.

## Patentansprüche

1. Scheibenförmiger Stützisolator (1) für eine dreiphasig gekapselte, druckgasisolierte Hochspannungsanlage,
bestehend aus einem scheibenförmigen Isolierteil (2), einer das Isolierteil in dessen Randbereich (25) erfassenden Ringarmatur (3) und drei auf einem Teilkreis angeordneten, in das Isolierteil eingebetteten Durchführungsarmaturen (4),
**dadurch gekennzeichnet, dass**
das Isolierteil (2) eine Struktur aufweist, die aus wenigstens zwei konzentrisch und gegenläufig zueinander angeordneten Hohlkegelstümpfen (21, 22) zusammengesetzt ist,
wobei die Hohlkegelstümpfe in einem ringartigen Bereich (23) ineinander übergehen,
und dass die Durchführungsarmaturen (4) in den ringartigen Übergangsbereich (23) des Isolierteiles (2) eingebettet sind und der ringartige Übergangsbereich (23) hierzu jeweils domartig (24) aufgeweitet ist.

2. Stützisolator nach Anspruch 1,
**dadurch gekennzeichnet, dass**
die axiale Länge (L) der Durchführungsarmaturen (4) der axialen Höhe der Ringarmatur (3) entspricht und dass die Durchführungsarmaturen (4) und die Ringarmatur (3) parallel zueinander ohne axialen Versatz angeordnet sind.

3. Stützisolator nach Anspruch 1 oder 2,
**dadurch gekennzeichnet, dass**
der Randbereich (25) des Isolierteiles (2) außermittig in die Ringarmatur (3) eingreift und dass die axiale Höhe (H) des Isolierteiles (2) kleiner als die axiale Höhe (L) der Ringarmatur (3) ist.

4. Stützisolator nach einem der Ansprüche 1 bis 3,
**dadurch gekennzeichnet, dass**
die Struktur des Isolierteiles (12) aus drei Hohlkegelstümpfen (26, 27, 28) zusammengesetzt ist, von denen der äußere (26) flacher aus die beiden inneren (27, 28) und der innere (28) als Kegelspitze ausgebildet ist,
und dass die Durchführungsarmaturen (14) im ringartigen Übergangsbereich (29) vom mittleren (27) auf den äußeren (26) Hohlkegelstumpf angeordnet sind.

## Claims

1. Disc-shaped post insulator (1) for a three-phase encapsulated, compressed gas-insulated high-voltage system, comprising a disc-shaped insulating part (2), a ring armature (3), which grips the insulating part in its edge region (25), and three bushing armatures (4), which are arranged on part of a circle and are embedded in the insulating part, **characterized in that** the insulating part (2) has a structure which is composed of at least two truncated hollow cones (21, 22), which are arranged concentrically and in opposite directions to one another, the truncated hollow cones merging into one another in an annular region (23), and **in that** the bushing armatures (4) are embedded in the annular transition region (23) of the insulating part (2), and the annular transition region (23) is widened for this purpose in each case in the form of a dome (24).

2. Post insulator according to Claim 1, **characterized in that** the axial length (L) of the bushing armatures (4) corresponds to the axial height of the ring armature (3), and **in that** the bushing armatures (4) and the ring armature (3) are arranged parallel to one another without an axial offset.

3. Post insulator according to Claim 1 or 2, **characterized in that** the edge region (25) of the insulating part (2) engages eccentrically in the ring armature (3), and **in that** the axial height (H) of the insulating part (2) is smaller than the axial height (L) of the ring armature (3).

4. Post insulator according to one of Claims 1 to 3, **characterized in that** the structure of the insulating part (12) is composed of three truncated hollow cones (26, 27, 28), of which the outer one (26) is flatter than the two inner ones (27, 28), and the inner one (28) is in the form of a cone tip, and **in that** the bushing armatures (14) are arranged in the annular transition region (29) from the central truncated hollow cone (27) to the outer truncated hollow cone (26).

## Revendications

1. Support (1) isolant en forme de disque pour une installation en haute-tension à boîtier prévu pour du triphasé et isolée par du gaz sous pression, constitué d'une pièce (2) isolante en forme de disque d'une armature (3) annulaire enchâssant la pièce isolante dans sa zone (25) de bords et trois armatures (4) de traversées disposées sur un sous-cercle et incorporées dans la pièce isolante, **caractérisé en ce que** la pièce (2) isolante a une structure, qui est composée d'au moins deux troncs de cônes (21, 22) creux, concentriques et disposés en sens opposé l'un par rapport à l'autre, les troncs de cônes creux se transformant en une zone (23) de type annulaire,
et **en ce que** les armatures (4) de traversées sont incorporées dans la zone (23) de transition de type annulaire de la pièce (2) isolante et la zone (23) de transition de type annulaire est à cet effet élargie respectivement à la manière d'un dôme (24).

2. Support isolant suivant la revendication 1,
**caractérisé en ce que** la longueur (L) axiale des armatures (4) de traversées correspond à la hauteur axiale de l'armature (3) annulaire et **en ce que** les armatures (4) de traversées et l'armature (3) annulaire sont disposées parallèlement les unes aux autres sans décalage axial.

3. Support isolant suivant la revendication 1 ou 2,
**caractérisé en ce que** la zone (25) de bords de la pièce (2) isolante pénètre en dehors du milieu dans l'armature (3) annulaire et **en ce que** la hauteur (H) axiale de la pièce (2) isolante est plus petite que la hauteur (L) axiale de l'armature (3) annulaire.

4. Support isolant suivant l'une des revendications 1 à 3,
**caractérisé en ce que** la structure de la pièce (12) isolante est composée de trois troncs de cône (26, 27, 28) creux dont celui extérieur (26) est plus plat que les deux intérieurs (27, 28) et celui intérieur (28) est constitué en sommet de cône,
**en ce que** les armatures (14) de traversées sont disposées dans la zone (29) de transition annulaire en allant du tronc de cône creux médian (27) aux troncs de cône creux extérieurs (26).
